# EUROPEAN PATENT APPLICATION

(11) **EP 4 613 825 A1**
(43) Date of publication of application: **10.09.2025**
(21) Application number: 25160882.4
(22) Date of filing: 28.02.2025
(51) Int. Cl.: C09D 11/16, C09D 11/17

(54) **WATER-BASED INK COMPOSITION FOR WRITING INSTRUMENT**

(30) Priority: 05.03.2024 JP 2024033152
(71) Applicant: MITSUBISHI PENCIL COMPANY, LIMITED, Tokyo 140-8537 (JP)
(72) Inventor: HAGA, Hisato, Tokyo, 140-8537 (JP); INOUE, Kensuke, Fujioka-shi, 375-8501 (JP)
(74) Representative: Vossius & Partner Patentanwälte Rechtsanwälte mbB

(57) **Abstract**

The water-based ink composition for a writing instrument of the present invention contains resin particles and pentaerythritol, in which
the content of the resin particles is 0.1% by mass or more, based on the mass of the water-based ink composition for a writing instrument.

## Description

### FIELD

The present invention relates to a water-based ink composition for a writing instrument.

### BACKGROUND

Conventionally, water-based ink compositions to be used for writing instruments, in particular marking pens, have mainly contained water or water-soluble solvents as solvents. Such water-based ink compositions have problems in terms of drying resistance (non-dryness) after a lapse of a long time in the state of pen tip portions of writing instruments being opened, suppression of bleeding during writing, and the like. In order to solve these problems, various solutions have been proposed.

PTL 1 discloses a liquid composition including at least a colorant, water, and one, or two or more selected from an amino acid, an amino acid salt, and an amino acid derivative.

PTL 2 discloses an ink composition including carbon black and/or an organic pigment, water, polysaccharide, two or more diols, and a granulated product of an acrylic resin.

PTL 3 discloses a water-based ink composition for a writing instrument, the composition containing at least a colorant agent, trimethylglycine, pentaerythritol, 10% by mass or less of a water-soluble organic solvent, and water.

PTL 4 discloses a water-based ink composition for a writing instrument, the composition containing at least glycine betaine and a sugar alcohol having two or more sugar units.

PTL 5 discloses a liquid composition including at least a colorant, water, and one, or two or more selected from an amino acid, an amino acid salt, and an amino acid derivative.

Ink compositions may also contain resin particles in order to improve color formability and bleeding resistance of ink.

PTL 6 discloses an ink composition including a dispersion in which a pigment can be dispersed in water and the average particle size is 50 nm or more and 300 nm or less, and polymeric fine particles having a glass transition temperature of -10°C or less and an acid value of 100 mgKOH/g or less.

### [CITATION LIST]

### [PATENT LITERATURE]

[PTL 1] Japanese Unexamined Patent Publication (Kokai) No. H05-271601
[PTL 2] International Publication No. WO 2018/105019
[PTL 3] Japanese Unexamined Patent Publication (Kokai) No. 2016-151003
[PTL 4] Japanese Unexamined Patent Publication (Kokai) No. 2017-52832
[PTL 5] Japanese Unexamined Patent Publication (Kokai) No. H05-295292
[PTL 6] Japanese Unexamined Patent Publication (Kokai) No. 2009-221459

### SUMMARY

### [TECHNICAL PROBLEM]

The present invention provides a novel water-based ink composition for a writing instrument, in which not only bleeding of ink and the difference in density of a drawn line during writing, and sagging of ink are suppressed, but also favorable non-dryness is obtained.

### [SOLUTION TO PROBLEM]

As a result of extensive studies, the present inventors have found that the above problems can be solved by the following solutions and have therefor completed the present invention. More specifically, the present invention is as follows:
<Aspect 1> A water-based ink composition for a writing instrument, the ink composition comprising resin particles and pentaerythritol, wherein
   a content of the resin particles is 0.1% by mass or more based on a mass of the water-based ink composition for a writing instrument.
<Aspect 2> The water-based ink composition for a writing instrument according to Aspect 1, wherein
   the resin particles comprise colored resin particles and colorless resin particles, and
   a content of the colorless resin particles is 4% by mass or more based on the mass of the water-based ink composition for a writing instrument.
<Aspect 3> The water-based ink composition for a writing instrument according to Aspect 1 or 2, wherein the ink composition further comprises at least one selected from the group consisting of glycine betaine, trimethylolpropane, and trimethylolethane.
<Aspect 4> The water-based ink composition for a writing instrument according to Aspect 3, wherein a total content of the glycine betaine, the trimethylolpropane, and the trimethylolethane is 0.1% by mass or more and 15% by mass or less.
<Aspect 5> The water-based ink composition for a writing instrument according to any one of Aspects 1 to 4, wherein a content of the pentaerythritol is 0.1% by mass or more and 5% by mass or less.

### [ADVANTAGEOUS EFFECTS OF INVENTION]

The present invention provides a novel water-based ink composition for a writing instrument, in which not only bleeding of ink and the difference in density of a drawn line during writing, and sagging of ink are suppressed, but also favorable non-dryness is obtained.

### DESCRIPTION OF EMBODIMENTS

### <<Water-Based Ink Composition for Writing Instrument>>

The water-based ink composition for a writing instrument of the present invention contains resin particles and pentaerythritol, in which
the content of the resin particles is 0.1% by mass or more based on the mass of the water-based ink composition for a writing instrument.

In a case where resin particles are used for water-based ink compositions for writing instruments, a problem has been that, although bleeding of ink and the difference in density of a drawn line during writing, and sagging of ink can be suppressed, sufficient non-dryness cannot be obtained. In contrast, the present inventors have found that a combination of resin particles and pentaerythritol can allow for sufficient non-dryness with the above advantages of resin particles being utilized. While not limited to any theory, the reason for this is considered because, when ink is dried, pentaerythritol as a tetrahydric alcohol is taken together with resin particles to form a coating film and thus suppress excess drying.

The water-based ink composition for a writing instrument of the present invention preferably further includes at least one selected from the group consisting of glycine betaine, trimethylolpropane, and trimethylolethane, from the viewpoint of a further improvement in non-dryness.

Herein, the "water-based ink composition for a writing instrument" means an ink composition including an aqueous medium as a liquid component.

The water-based ink composition for a writing instrument of the present invention may further contain a coloring material.

Hereinafter, each constituent component of the present invention will be described.

### <Aqueous Medium>

The aqueous medium contains water and an optional water-soluble organic solvent. The content of the water is highest in the liquid component of the aqueous medium, and in particular the content of the water based on the mass of the aqueous medium may be more than 50% by mass, 60% by mass or more, 70% by mass or more, 75% by mass or more, or 78% by mass or more, and may be 100% by mass or less, 95% by mass or less, or 90% by mass or less.

### (Water)

The water used here can be, for example, tap water, purified water, distilled water, ion-exchange water, or pure water.

### (Water-Soluble Organic Solvent)

The water-soluble organic solvent used here can be, for example, an aromatic compound, an alcohol compound, a polyhydric alcohol compound, an ether compound, or an ester compound, and in particular, a polyhydric alcohol compound is preferably used from the viewpoint of writing performance. These solvents may be used singly or in combination thereof.

The aromatic compound used here can be, for example, benzyl alcohol, ethylene glycol monophenyl ether, ethylene glycol monobenzyl ether, propylene glycol monophenyl ether, diethylene glycol monophenyl ether, or alkylsulfonic acid phenyl ester.

The alcohol compound used here can be, for example, ethanol, n-propanol, isopropanol, n-butanol, isobutanol, tert-butyl alcohol, 1-pentanol, isoamyl alcohol, sec-amyl alcohol, 3-pentanol, tert-amyl alcohol, n-hexanol, methyl amyl alcohol, 2-ethylbutanol, n-heptanol, 2-heptanol, 3-heptanol, n-octanol, 2-octanol, 2-ethylhexanol, 3,5,5-trimethylhexanol, nonanol, n-decanol, undecanol, n-decanol, trimethylnonyl alcohol, tetradecanol, heptadecanol, cyclohexanol, or 2-methylcyclohexanol.

The polyhydric alcohol compound used here can be, for example, a dihydric alcohol such as ethylene glycol, propylene glycol, 3-methyl-1,3-butanediol, dipropylene glycol, 1,3-propanediol, 1,3-butanediol, 1,5-pentanediol, hexylene glycol, or octylene glycol, or a trihydric alcohol such as glycerin.

The ether compound used here can be, for example, methyl isopropyl ether, ethyl ether, ethyl propyl ether, ethyl butyl ether, isopropyl ether, butyl ether, hexyl ether, 2-ethyl hexyl ether, ethylene glycol monohexyl ether, ethylene glycol mono-2-ethyl butyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monobutyl ether, tetraethylene glycol monobutyl ether, 3-methyl-3-methoxy-1-butanol, 3-methoxy-1-butanol, propylene glycol monomethyl ether, propylene glycol monoethyl ether, propylene glycol monopropyl ether, propylene glycol monobutyl ether, propylene glycol-t-butyl ether dipropylene glycol monomethyl ether, dipropylene glycol monoethyl ether, dipropylene glycol monopropyl ether, dipropylene glycol monobutyl ether, tripropylene glycol monomethyl ether, tripropylene glycol monobutyl ether, or tetrapropylene glycol monobutyl ether.

The ester compound used here can be, for example, propylene glycol methyl ether acetate, propylene glycol diacetate, 3-methyl-3-methoxybutyl acetate, propylene glycol ethyl ether acetate, ethylene glycol ethyl ether acetate, butyl formate, isobutyl formate, isoamyl formate, propyl acetate, butyl acetate, isopropyl acetate, isobutyl acetate, isoamyl acetate, methyl propionate, ethyl propionate, propyl propionate, isobutyl propionate, isoamyl propionate, methyl butyrate, ethyl butyrate, propyl butyrate, methyl isobutyrate, ethyl isobutyrate, propyl isobutyrate, methyl valerate, ethyl valerate, propyl valerate, methyl isovalerate, ethyl isovalerate, propyl isovalerate, methyl trimethylacetate, ethyl trimethylacetate, propyl trimethylacetate, methyl caproate, ethyl caproate, propyl caproate, methyl caprylate, ethyl caprylate, propyl caprylate, methyl laurate, ethyl laurate, methyl oleate, ethyl oleate, capric triglyceride, tributyl acetate citrate, octyl oxystearate, propylene glycol monoricinoleate, methyl 2-hydroxyisobutyrate, or 3-methoxybutyl acetate.

The content of the water-soluble organic solvent, based on the total mass of the water-based ink composition for a writing instrument, may be 3% by mass or more, 5% by mass or more, 7% by mass or more, 10% by mass or more, or 12% by mass or more, and may be 30% by mass or less, 25% by mass or less, 20% by mass or less, or 17% by mass or less.

In particular, in a case where the water-soluble organic solvent is a polyhydric alcohol, the ratio of the amount of substance of the water-soluble organic solvent to the amount of substance of the water in the water-based ink composition for a writing instrument is preferably 0.055 or less, 0.050 or less, or 0.045 or less, from the viewpoint of more improvements in bleeding resistance and non-dryness.

### <Resin Particles>

The resin particles used here can be colorless resin particles and colored resin particles. These resin particles may be used singly or mixed and then used.

For example, a (meth)acrylate monomer, a hydrophobic vinyl monomer, or an aqueous monomer can be used for the resin particles.

The content of the resin particles may be 0.1% by mass or more and 29.0% by mass or less. The content may be 0.1% by mass or more, 0.5% by mass or more, 1.0% by mass or more, 1.5% by mass or more, 2.0% by mass or more, 2.5% by mass or more, 3.0% by mass or more, 4.0% by mass or more, 5.0% by mass or more, 6.0% by mass or more, 7.0% by mass or more, 8.0% by mass or more, 9.0% by mass or more, 10.0% by mass or more, 11.0% by mass or more, 12.0% by mass or more, 13.0% by mass or more, 13.5% by mass or more, 14.0% by mass or more, 14.5% by mass or more, 15.0% by mass or more, 15.5% by mass or more, 16.0% by mass or more, 16.5% by mass or more, 17.0% by mass or more, 17.5% by mass or more, 18.0% by mass or more, or 18.5% by mass or more, and may be 30.0% by mass or less, 29.0% by mass or less, 28.0% by mass or less, 27.0% by mass or less, 26.0% by mass or less, 25.0% by mass or less, 24.0% by mass or less, 23.0% by mass or less, 22.0% by mass or less, 21.0% by mass or less, 20.0% by mass or less, or 19.0% by mass or less. In particular, in a case where the content is 0.5% by mass or more and 20.0% by mass or less, favorable color formability can be obtained.

The content of the colorless resin particles in the resin particles, based on the mass of the water-based ink composition for a writing instrument, may be 0.05% by mass or more and 28.5% by mass or less. The content may be 0.1% by mass or more, 0.5% by mass or more, 1.0% by mass or more, 1.5% by mass or more, 2.0% by mass or more, 2.5% by mass or more, 3.0% by mass or more, 4.0% by mass or more, 5.0% by mass or more, or 5.5% by mass or more, and may be 28.5% by mass or less, 28.0% by mass or less, 27.0% by mass or less, 26.0% by mass or less, 25.0% by mass or less, 24.0% by mass or less, 23.0% by mass or less, 22.0% by mass or less, 21.0% by mass or less, 20.0% by mass or less, 19.0% by mass or less, 18.5% by mass or less, 18.0% by mass or less, 17.5% by mass or less, 17.0% by mass or less, 16.5% by mass or less, 16.0% by mass or less, 15.5% by mass or less, 15.0% by mass or less, 14.5% by mass or less, 14.0% by mass or less, 13.5% by mass or less, 13.0% by mass or less, 12.5% by mass or less, 12.0% by mass or less, 12.5% by mass or less, 11.0% by mass or less, 11.5% by mass or less, 10.0% by mass or less, 9.5% by mass or less, 9.0% by mass or less, 8.5% by mass or less, 8.0% by mass or less, 7.5% by mass or less, 7.0% by mass or less, 6.5% by mass or less, or 6.0% by mass or less.

The D50 of the resin particles is preferably 20 to 900 nm from the viewpoints of improvements in stability over time of ink and difference between upper and lower densities. The D50 may be 20 nm or more, 30 nm or more, 40 nm or more, 50 nm or more, 55 nm or more, or 60 nm or more, and may be 900 nm or less, 850 nm or less, 800 nm or less, 750 nm or less, 700 nm or less, 650 nm or less, 600 nm or less, 550 nm or less, 500 nm or less, 450 nm or less, 400 nm or less, 350 nm or less, 300 nm or less, 250 nm or less, 200 nm or less, 150 nm or less, 120 nm or less, 110 nm or less, 100 nm or less, 90 nm or less, 80 nm or less, or 70 nm or less. The D50 is a histogram average particle size (D50) value according to a scattering intensity distribution measured by a dynamic light scattering method, and the method can be performed with, for example, DelsaMax CORE (Beckman Coulter, Inc.).

### <Pentaerythritol>

The pentaerythritol used here can be commercially available one.

The content of the pentaerythritol based on the mass of the water-based ink composition for a writing instrument may be 0.1 to 30% by mass. The content may be 0.1% by mass or more, 0.3% by mass or more, 0.5% by mass or more, 0.7% by mass or more, 1% by mass or more, or 2% by mass or more, and may be 30% by mass or less, 25% by mass or less, 20% by mass or less, 15% by mass or less, 12% by mass or less, 10% by mass or less, 7% by mass or less, or 5% by mass or less. In particular, the content of the pentaerythritol is preferably 5% by mass or less, from the viewpoint that a favorable writing feeling is obtained.

### <Glycine Betaine, Trimethylolpropane, and Trimethylolethane>

The glycine betaine, the trimethylolpropane, and the trimethylolethane used here can be each commercially available one. These can be further contained to suppress crystallization which can occur in the case of use of pentaerythritol, and thus further improve non-dryness.

The total content of the glycine betaine, the trimethylolpropane, and the trimethylolethane, based on the mass of the water-based ink composition for a writing instrument, may be 0.1 to 30% by mass. The content may be 0.1% by mass or more, 0.3% by mass or more, 0.5% by mass or more, 0.7% by mass or more, 1% by mass or more, or 2% by mass or more, and may be 30% by mass or less, 25% by mass or less, 20% by mass or less, 15% by mass or less, 12% by mass or less, 10% by mass or less, 7% by mass or less, or 5% by mass or less. In particular, in a case where this total content is 5% by mass or less, bleeding resistance can be improved.

The content of each of the glycine betaine, the trimethylolpropane, and the trimethylolethane, based on the mass of the water-based ink composition for a writing instrument, may be 0.1 to 10% by mass. The content may be 0.1% by mass or more, 0.3% by mass or more, or 0.5% by mass or more, and may be 10% by mass or less, 8% by mass or less, 6% by mass or less, 5% by mass or less, 4% by mass or less, or 3% by mass or less.

### <Coloring Material>

The coloring material used here can be, for example, any of various coloring materials which can be used for conventional ink, such as a dye, a pigment, or a mixture of a dye and a pigment. These colorants may be used singly or mixed and then used.

Any dye to be dissolved or dispersed in water can be used as the dye, and examples thereof include acidic dyes such as Eosin, Phloxine, Water Yellow #6-C, Acid Red, Water Blue #105, Brilliant Blue FCF, and Nigrosin NB; direct dyes such as Direct Black 154, Direct Skyblue 5B, and Violet BB; and basic dyes such as Rhodamine and Methyl Violet.

The pigment used here can be, for example, any of conventionally known inorganic and organic pigments, such as titanium oxide, a pigment- or dye-containing resin particle pigment, a pseudo pigment in which a resin emulsion is colored with a dye or a pigment, a white plastic pigment, a thermally color-changing pigment, or optically color-changing particles, without any limitation.

The inorganic pigment used here can be, for example, carbon black, titanium black, zinc flower, rouge, aluminum, chromium oxide, iron black, cobalt blue, iron oxide yellow, viridian, zinc sulfide, lithopone, cadmium yellow, vermilion, cadmium red, lead yellow, molybdate orange, zinc chromate, strontium chromate, white carbon, clay, talc, ultramarine, sedimentary barium sulfate, a baryte powder, calcium carbonate, lead white, navy blue white, iron blue, manganese violet, an aluminum powder, or a brass powder.

Examples of the organic pigment include azo lake, an insoluble azo pigment, a chelate azo pigment, a phthalocyanine pigment, perylene and perinone pigments, and a nitroso pigment. Examples of such an organic pigment include C.I. Pigment Blue 17, C.I. Pigment Blue 15, C.I. Pigment Blue 17, C.I. Pigment Blue 27, C.I. Pigment Red 5, C.I. Pigment Red 22, C.I. Pigment Red 38, C.I. Pigment Red 48, C.I. Pigment Red 49, C.I. Pigment Red 53, C.I. Pigment Red 57, C.I. Pigment Red 81, C.I. Pigment Red 104, C.I. Pigment Red 146, C.I. Pigment Red 245, C.I. Pigment Yellow 1, C.I. Pigment Yellow 3, C.I. Pigment Yellow 12, C.I. Pigment Yellow 13, C.I. Pigment Yellow 14, C.I. Pigment Yellow 17, C.I. Pigment Yellow 34, C.I. Pigment Yellow 55, C.I. Pigment Yellow 74, C.I. Pigment Yellow 95, C.I. Pigment Yellow 166, C.I. Pigment Yellow 167, C.I. Pigment Orange 5, C.I. Pigment Orange 13, C.I. Pigment Orange 16, C.I. Pigment Violet 1, C.I. Pigment Violet 3, C.I. Pigment Violet 19, C.I. Pigment Violet 23, C.I. Pigment Violet 50, and C.I. Pigment Green 7.

Examples of the thermally color-changing pigment can include a thermally color-changing pigment produced by microencapsulation of a thermally color-changing composition including at least a leuco dye functioning as a color former, and a developer serving as a component having the ability of color formation of the leuco dye and a color-changing temperature adjuster capable of controlling the color-changing temperature in coloring of the leuco dye and the developer so that a predetermined average particle size (for example, 0.1 to 6 µm) is achieved. The average particle size, for example, may be 0.1 µm or more, 0.2 µm or more, 0.3 µm or more, 0.5 µm or more, 0.7 µm or more, or 0.9 µm or more, and may be 6 µm or less, 5 µm or less, 4 µm or less, 3 µm or less, 2 µm or less, or 1 µm or less.

The optically color-changing particles used here can be, for example, optically color-changing particles constituted from at least one or more selected from optically color-changing substances such as a photochromic dye (compound) and a fluorescent dye, and a resin such as a terpene phenolic resin. Examples of the optically color-changing particles can include optically color-changing particles produced by microencapsulation of an optically color-changing composition including at least one or more selected from optically color-changing substances such as a photochromic dye (compound) and a fluorescent dye, an organic solvent, and additive(s) such as an antioxidant, a light stabilizer, and/or a sensitizer so that a predetermined average particle size (for example, 0.1 to 6 µm) is achieved.

The optically color-changing particles can have, for example, one having the property of being colorless in an indoor lighting environment (lighting equipment selected from indoor incandescent lamp, fluorescent lamp, lamp, white LED, and the like) and providing color-forming in an ultraviolet radiation environment (environment of irradiation with a radiation at a wavelength of 200 to 400 nm, or sunlight including ultraviolet light), by suitable use of the above optically color-changing substance.

The "average particle size" in the present invention (including Examples and the like) is appropriately selected depending on the size of particles to be measured, and is a value of a histogram average particle size (D50) calculated on the volume basis in a scattering intensity distribution measured by a dynamic light scattering method in the case of particles having a size of less than 1 µm and is a value of a median size (D50) calculated on the volume basis by a laser diffraction method in the case of particles having a size of 1 µm or more. The average particle size can be determined by measurement with a particle size analyzer [Microtrac HRA9320-X100 (Nikkiso Co., Ltd.)].

Examples of the microencapsulation method of the thermally color-changing pigment and the optically color-changing particles can include an interfacial polymerization method, an interfacial polycondensation method, an in-situ polymerization method, a submerged hardening coating method, a phase separation method from an aqueous solution, a phase separation method from an organic solvent, a melt dispersion cooling method, an air suspension coating method, and a spray drying method, and the method can be appropriately selected depending on the application.

A thermally color-changing microcapsule pigment can be produced by, for example, a method including the following steps, in particular, a method including performing the following steps in the listed order, in the phase separation method from an aqueous solution:
(1) heating and melting a leuco dye, a developer, and a color-changing temperature adjuster,
(2) loading the leuco dye, the developer, and the color-changing temperature adjuster heated and molten, to an emulsifier solution, and heating and stirring the mixture and thus dispersing the resultant in the form of an oil droplet, to produce a dispersion liquid,
(3) gradually loading, as a capsule membrane material, a resin raw material capable of forming a wall membrane, such as a urethane resin, an epoxy resin, or an amino resin, for example, an amino resin solution, specifically, an amino resin solution such as an aqueous methylol melamine solution, a urea solution, or a benzoguanamine solution, to the dispersion liquid, to react the resin raw material and thus generate a capsule membrane, thereby obtaining a thermally color-changing microcapsule pigment, and
(4) filtering the dispersion liquid including the thermally color-changing microcapsule pigment.

The types, the amounts, and the like of the leuco dye, the developer and the color-changing temperature adjuster in the thermally color-changing pigment can be suitably combined, to set the color-formation temperature and the decoloring temperature of each color to suitable temperatures.

These coloring materials may be used singly or as a mixture of two or more kinds thereof. Among these coloring materials, a pigment to be dispersed in water, a resin particle pigment, a pseudo pigment, a white plastic pigment, a pigment subjected to multi-layer coating, a thermally color-changing pigment, optically color-changing particles, and the like are varied in average particle size depending in the ball diameter, the compositional ratio/viscosity of ink, and the like, and one having an average particle size of 0.02 to 6 µm is desired. The average particle size, for example, may be 0.02 µm or more, 0.05 µm or more, 0.07 µm or more, 0.10 µm or more, 0.20 µm or more, 0.30 µm or more, 0.50 µm or more, 0.70 µm or more, or 0.90 µm or more, and may be 6 µm or less, 5 µm or less, 4 µm or less, 3 µm or less, 2 µm or less, or 1 µm or less.

The content of such a coloring material can be appropriately increased or decreased depending on the drawn line density of ink, and the content based on the total mass of the ink composition may be 0.1% by mass or more, 0.3% by mass or more, 0.5% by mass or more, 0.7% by mass or more, 0.9% by mass or more, or 1.0% by mass or more, and is preferably 40% by mass or less, 35% by mass or less, 30% by mass or less, 25% by mass or less, 20% by mass or less, 15% by mass or less, or 10% by mass or less.

### <Additional Component>

The water-based ink composition for a writing instrument of the present invention may contain an optionally additional component. Examples of the additional component include a humectant, a dispersant, a lubricant, a pH adjuster, a rust inhibitor, a preservative agent, an antibacterial agent, and a resin for fixation.

The dispersant used here is a water-soluble resin. The dispersant used here is preferably a water-soluble polymer.

The lubricant here used can be, for example, a lubricant to be used in a surface treatment agent for pigments, and, for example, a non-ionic surfactant such as a fatty acid ester of polyhydric alcohol, a higher fatty acid ester of sugar, a polyoxyalkylene higher fatty acid ester, or alkyl phosphate, an anionic surfactant such as phosphate, or an alkyl sulfonate or alkyl allyl sulfonate of higher fatty acid amide, a polyalkylene glycol derivative, or polyether-modified silicone can be used.

The thickener used here can be any known thickener, and specifically, at least one selected from a polysaccharide group including a cellulose derivative, crystalline cellulose, rheozan gum, gellan gum, xanthane gum, succinoglycan, and the like, organic thickeners such as an alkali swelling association type emulsion, an alkali swelling type emulsion, polyvinylpyrrolidone, and a crosslinking type acrylic acid polymer, inorganic thickeners such as montmorillonite-based clay mineral, and the like can be used.

Examples of the pH adjuster include amines such as ammonia, urea, monoethanolamine, diethanolamine, and triethanolamine, carbonic acid and phosphoric acid alkali metal salts such as sodium tripolyphosphate and sodium carbonate, and alkali metal salt hydrates such as sodium hydroxide.

The rust inhibitor used here can be, for example, benzotriazole, tolyl triazole, dicyclohexylammonium nitrite, or saponin. The preservative agent or the antibacterial agent used here can be, for example, phenol, omadine sodium, sodium benzoate, a thiazoline-based compound, or a benzimidazole-based compound.

The resin for fixation is, if necessary, a resin to be used in terms of viscosity adjustment and an enhancement in fixation force. The resin for fixation, used here, can be, for example, a water-soluble resin or a resin emulsion.

The water-soluble resin used here can be, for example, a water-soluble resin having a hydrophobic moiety in its molecule, such as polyacrylic acid, a water-soluble styrene-acrylic resin, a water-soluble styrene-maleic acid resin, polyvinyl alcohol, polyvinylpyrrolidone, a water-soluble maleic acid resin, a water-soluble styrene resin, a water-soluble ester-acrylic resin, an ethylene-maleic acid copolymer, polyethylene oxide, or a water-soluble urethane resin.

The resin emulsion used here can be, for example, at least one selected from a polyolefinbased emulsion, an acrylic emulsion, a vinyl acetate-based emulsion, a urethane-based emulsion, a styrene-butadiene emulsion, a styrene-acrylonitrile emulsion, and the like.

The resin for fixation may be used singly or mixed and then used. In particular, one or more with respect to each of the above water-soluble resin and resin emulsion, namely, two or more such resins for fixation are preferably used from the viewpoint of fixation properties.

The above additional components may be used singly or in combination of two or more kinds thereof. Commercially available products thereof, if present, may also be used.

### <<Writing Instrument>>

The writing instrument of the present invention includes an ink storage portion, a writing portion, and a holding portion, in which
the water-based ink composition for a writing instrument is stored in the ink storage portion.

The writing instrument may be a marking pen. Herein, the "marking pen" means a pen having a mechanism for supplying ink stored in the ink storage portion, to a resin-based writing portion, by use of capillary action, and also encompasses a pen which is called "marking pen" by those skilled in the art.

### <Ink Storage Portion>

The water-based ink composition for a writing instrument is stored in the ink storage portion.

Any article can be used as the ink storage portion as long as it can allow ink to be stored and allow such ink to be supplied to the writing portion.

### <Writing Portion>

The writing portion may be formed from an optional material depending on the application of the writing instrument. In a case where the writing instrument of the present invention is a marking pen, examples of the writing portion include a fibrous core and a plastic core.

### EXAMPLES

The present invention is specifically described with reference to Examples and Comparative Examples, but the present invention is not limited thereto.

### <<Production of Water-Based Ink Composition for Writing Instrument>>

Materials shown in Table 1 were mixed in amounts each expressed with "parts by mass" shown in Table 1, to produce each water-based ink composition for a writing instrument of Examples and Comparative Examples. The details of substances shown in Table 1 are as follows.
Colorless resin particles: dispersion of acrylic colorless resin particles (solid content 28.46% by mass, D50:40 nm)
Colored resin particles: dispersion of acrylic colored resin particles (solid content 36.11% by mass, D50:110 nm)
Preservative agent: Bio Ace W (manufactured by Daiwa Chemical Industries Co., Ltd.)

The viscosity of the obtained water-based ink composition for a writing instrument was measured in conditions of 25°C and a number of rotations of 50 rpm.

### <<Evaluation>>

A marking pen (PIN-05: MITSUBISHI PENCIL COMPANY, LIMITED) was filled with each of the produced water-based ink compositions for writing instruments, and the following evaluations were performed.

### <Bleeding Resistance>

A circle having a diameter of about 5 cm was written on PPC paper. After this PPC paper was left to still stand at 50°C for one month, the state of the drawn line was evaluated according to the following evaluation criteria.
A: no bleeding was observed.
B: slight bleeding was observed.
C: apparent bleeding was observed.
D: bleeding was observed at a degree of a doubled thickness of the drawn line.

### <Color Formability>

A circle having a diameter of about 5 cm was written on PPC paper, and the appearance of a drawn line was visually observed. The evaluation criteria are as follows.
A: very good color formation.
B: good color formation.
C: not-so-good color formation.
D: poor color formation.

### <Difference between Upper and Lower Densities>

A straight line of about 20 cm was written on PPC paper, and the central section and the outer side of the drawn line at a point of 20 cm from the start of writing were visually observed. The evaluation criteria are as follows.
A: no difference in density was observed.
B: a slight difference in density was observed.
C: a clear difference in density was observed.
D: a remarkable difference in density was observed.

### <Non-Dryness>

After the cap of the marking pen was removed and the pen tip was allowed to face upward and left to still stand for a predetermined time, a drawn line was written on PPC paper and the appearance thereof was visually observed, to perform non-dryness evaluation. The evaluations with respect to a case where the marking pen was left to still stand for 1 hour and a case where the marking pen was left to still stand for 5 hours were performed according to the following evaluation criteria:
A: no blurring was observed.
B: slight blurring was observed.
C: remarkable blurring was observed.
D: no ink was ejected at all.

### <Ink Sagging>

The cap of the marking pen was removed, the pen tip was allowed to face downward and left to still stand for 5 hours, and ink sagging was evaluated. The evaluation criteria are as follows.
A: no occurrence of sagging of ink.
B: presence of ink accumulation having a diameter of 0.5 mm or more and less than 1.0 mm.
C: presence of ink accumulation having a diameter of 1.0 mm or more and less than 2.0 mm.
D: presence of ink accumulation having a diameter of 2.0 mm or more.

The configurations and evaluation results of Examples and Comparative Examples are shown in Table 1 and Table 2.

### [Table 1]

**Table 1**

| | | | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 |
|---|---|---|---|---|---|---|---|---|---|---|---|---|---|---|---|---|
| Content of each component (% by mass) | Water-soluble organic solvent | Glycerin | 5 | 7.5 | | 5 | | 5 | 5 | 10 | 5 | 5 | 5 | 5 | 5 | 5 |
| | | Propylene glycol | | | 5 | | 7.5 | | | | | | | | | |
| | Colorless resin particle dispersion | | 20.00 | 20.00 | 20.00 | 20.00 | 20.00 | 20.00 | 20.00 | 20.00 | 30.00 | 0.18 | 1.76 | 42.16 | 0.14 | 20.00 |
| | Colored resin particle dispersion | | 36.00 | 36.00 | 36.00 | 36.00 | 36.00 | 36.00 | 36.00 | 36.00 | 36.00 | 0.14 | 1.38 | 47.08 | 0.11 | 36.00 |
| | Pentaerythritol | | 4 | 4 | 4 | 4 | 4 | 4 | 4 | 4 | 4 | 4 | 4 | 4 | 4 | |
| | Trimethylolethane | | 0.5 | 0.5 | 0.5 | 0.5 | 0.5 | 0.5 | | 0.5 | 0.5 | 0.5 | 0.5 | 0.5 | 0.5 | 0.5 |
| | Trimethylolpropane | | 0.5 | 0.5 | 0.5 | 0.5 | 0.5 | 0.5 | | 0.5 | 0.5 | 0.5 | 0.5 | 0.5 | 0.5 | 0.5 |
| | Glycine betaine | | | | | 2 | | 5 | | | | | | | | |
| | Preservative agent | | 0.5 | 0.5 | 0.5 | 0.5 | 0.5 | 0.5 | 0.5 | 0.5 | 0.5 | 0.5 | 0.5 | 0.5 | 0.5 | 0.5 |
| | Ion-exchange water | | 34.00 | 31.50 | 34.00 | 32.00 | 31.50 | 29.00 | 35.00 | 29.00 | 24.00 | 89.19 | 86.36 | 0.26 | 89.25 | 37.50 |
| | Total | | 100 | 100 | 100 | 100 | 100 | 100 | 100 | 100 | 100 | 100 | 100 | 100 | 100 | 100 |
| Content of resin particles (solid content) (% by mass) | | Colorless resin particles | 5.69 | 5.69 | 5.69 | 5.69 | 5.69 | 5.69 | 5.69 | 5.69 | 8.54 | 0.05 | 0.50 | 12.00 | 0.04 | 5.69 |
| | | Colored resin particles | 13.00 | 13.00 | 13.00 | 13.00 | 13.00 | 13.00 | 13.00 | 13.00 | 13.00 | 0.05 | 0.50 | 17.00 | 0.04 | 13.00 |
| | | Total | 18.69 | 18.69 | 18.69 | 18.69 | 18.69 | 18.69 | 18.69 | 18.69 | 21.54 | 0.10 | 1.00 | 30.00 | 0.08 | 18.69 |
| Viscosity | | | 4 | 4.4 | 4.1 | 4.1 | 4.5 | 4.3 | 3.9 | 5.1 | 5.3 | 1.2 | 1.2 | 7.8 | 1.1 | 3.8 |

### [Table 2]

**Table 2**

| | | | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 |
|---|---|---|---|---|---|---|---|---|---|---|---|---|---|---|---|---|
| Content of each component (% by mass) | Water-soluble organic solvent | Glycerin | 5 | 7.5 | | 5 | | 5 | 5 | 10 | 5 | 5 | 5 | 5 | 5 | 5 |
| | | Propylene glycol | | | 5 | | 7.5 | | | | | | | | | |
| | Pentaerythritol | | 4 | 4 | 4 | 4 | 4 | 4 | 4 | 4 | 4 | 4 | 4 | 4 | 4 | |
| | Trimethylolethane | | 0.5 | 0.5 | 0.5 | 0.5 | 0.5 | 0.5 | | 0.5 | 0.5 | 0.5 | 0.5 | 0.5 | 0.5 | 0.5 |
| | Trimethylolpropane | | 0.5 | 0.5 | 0.5 | 0.5 | 0.5 | 0.5 | | 0.5 | 0.5 | 0.5 | 0.5 | 0.5 | 0.5 | 0.5 |
| | Glycine betaine | | | | | 2 | | 5 | | | | | | | | |
| | Preservative agent | | 0.5 | 0.5 | 0.5 | 0.5 | 0.5 | 0.5 | 0.5 | 0.5 | 0.5 | 0.5 | 0.5 | 0.5 | 0.5 | 0.5 |
| Content of resin particles (solid content) (% by mass) | | Colorless resin particles | 5.69 | 5.69 | 5.69 | 5.69 | 5.69 | 5.69 | 5.69 | 5.69 | 8.54 | 0.05 | 0.50 | 12.00 | 0.04 | 5.69 |
| | | Colored resin particles | 13.00 | 13.00 | 13.00 | 13.00 | 13.00 | 13.00 | 13.00 | 13.00 | 13.00 | 0.05 | 0.50 | 17.00 | 0.04 | 13.00 |
| | | Total | 18.69 | 18.69 | 18.69 | 18.69 | 18.69 | 18.69 | 18.69 | 18.69 | 21.54 | 0.10 | 1.00 | 30.00 | 0.08 | 18.69 |
| Viscosity | | | 4 | 4.4 | 4.1 | 4.1 | 4.5 | 4.3 | 3.9 | 5.1 | 5.3 | 1.2 | 1.2 | 7.8 | 1.1 | 3.8 |
| Evaluation results | Bleeding resistance | | A | A | B | B | C | C | A | A | A | C | B | A | D | A |
| | Color formability | | A | A | A | A | A | A | A | A | B | C | C | B | D | A |
| | Non-dryness | 1 hour | A | B | A | A | B | A | C | C | B | A | A | C | A | D |
| | | 5 hours | A | B | A | A | B | A | C | C | B | A | A | C | A | D |
| | Ink sagging | | A | A | A | A | A | A | A | A | A | A | A | A | A | A |
| | Difference between upper and lower densities | | A | A | A | A | A | A | A | A | A | A | A | A | A | A |

It could be understood from Table 1 that the water-based ink composition for a writing instrument, of each Example, containing resin particles and pentaerythritol and having a content of the resin particles of 0.1% by mass or more based on the mass of the water-based ink composition for a writing instrument, not only was suppressed in bleeding of ink and difference in density of a drawn line during writing, and also sagging of ink, but also achieved favorable non-dryness.

## Claims

1. A water-based ink composition for a writing instrument, the ink composition comprising resin particles and pentaerythritol, wherein
a content rate of the resin particles is 0.1% by mass or more, based on a mass of the water-based ink composition for a writing instrument.

2. The water-based ink composition for a writing instrument according to claim 1, wherein
the resin particles comprise colored resin particles and colorless resin particles, and
a content of the colorless resin particles is 4% by mass or more, based on the mass of the water-based ink composition for a writing instrument.

3. The water-based ink composition for a writing instrument according to claim 1 or 2, wherein the ink composition further comprises at least one selected from the group consisting of glycine betaine, trimethylolpropane, and trimethylolethane.

4. The water-based ink composition for a writing instrument according to claim 3, wherein a total content of the glycine betaine, the trimethylolpropane, and the trimethylolethane is 0.1% by mass or more and 15% by mass or less.

5. The water-based ink composition for a writing instrument according to any one of claims 1 to 4, wherein a content of the pentaerythritol is 0.1% by mass or more and 5% by mass or less.
